# EUROPEAN PATENT SPECIFICATION

(11) **EP 3 838 540 B1**
(45) Date of publication and mention of the grant of the patent: **06.03.2024**
(21) Application number: 20209148.4
(22) Date of filing: 23.11.2020
(51) Int. Cl.: B29C 33/20, B29C 33/26, B29C 33/28, B29C 44/12, B29C 31/00, F25D 23/06

(54) **IMPROVED FOAMING SYSTEM AND METHOD FOR CABINETS OF HOUSEHOLD APPLIANCES, IN PARTICULAR REFRIGERATOR CABINETS**
VERBESSERTES AUFSCHÄUMSYSTEM UND VERFAHREN FÜR SCHRÄNKE VON HAUSHALTSGERÄTEN, INSBESONDERE KÜHLSCHRÄNKE
SYSTÈME DE MOUSSAGE AMÉLIORÉ ET PROCÉDÉ POUR ARMOIRES D'APPAREILS DOMESTIQUES, EN PARTICULIER DES ARMOIRES DE RÉFRIGÉRATEUR

(30) Priority: 19.12.2019 IT 201900024637
(43) Date of publication of application: 23.06.2021
(73) Proprietor: Cosma S.r.l., 20136 Milano (IT)
(72) Inventor: MORETTI, Bruno, 20136 MILANO (IT)
(74) Representative: Faggioni, Carlo Maria

(56) References cited:
- EP-A1- 0 985 506
- WO-A2-2010/094715
- FR-A- 1 539 760
- GB-A- 2 250 946

## Description

### FIELD OF THE INVENTION

The present invention relates to a foaming system for cabinets of household appliances, such as refrigerating cabinets. In particular, the invention relates to a foaming system comprising a holding apparatus of retaining jigs for the foaming of insulated panels.

### STATE OF THE PRIOR ART

As known, some types of household appliances require to arrange insulating and heat preserving layers between the outer casing, typically made of a metal sheet, and the inner operating part.

Typically, refrigerating cabinets comprise an important insulating layer which prevents heat loss between the inside and the outside of the fridge. In these cases, the consolidated manufacturing method provides to couple an inner finishing shell - that is, the part visible to the user when he or she opens the fridge - with an external cabinet casing - normally consisting of a painted metal sheet of a parallelepipedal shape - and then to inject insulating foam material into a gap between the two.

The foam material which is injected into the gap is typically an expandable polyurethane, but it can also be of another expandable insulating material. In the following, the assembly of inner shell coupled with the outer cabinet shall be called household appliance body.

Since the gap has a remarkable volume, precisely because the injected material must act as an effective insulating layer, during the expansion process of the injected material remarkable expansion pressures develop. In order to avoid that during the expansion step of the expandable material the inner shell and the outer cabinet, mutually coupled, end up bulging under the inner pressures, it is provided that they be temporarily engaged with a rigid containment structure.

As a matter of fact, it is important that the shell and the outer cabinet be maintained mutually coupled and that the respective surfaces rest against rigid abutment structures, so as not to yield under the pressure of the expanding foam. Once the cross-linking of the expandable material has finished, said material acquires dimensional stability and no longer imparts any pressure, so that the assembly of inner shell, outer cabinet and insulation can be removed from the containment structure.

Therefore, in foaming plants of household appliance cabinets, a holding apparatus is provided in a foaming station, also called foaming jig, wherein the inner shell and the outer cabinet are coupled and then constrained in an abutment structure, before performing the actual foaming.

Typically, the holding apparatus consists of a frame provided with moving abutting surfaces, meant to represent a containment against which the surfaces of the front shell and rear cabinet of the household appliance rest.

The external abutting surfaces consist of planar walls which form a kind of rectangular formwork wherein the rear cabinet of the household appliance is housed. The inner abutting surface is part of a plug element which matches the surface of the inner shell.

The assembly of outer walls and the inner plug are arranged apt to be mutually brought together to keep the rear cabinet and the inner shell coupled until the expansive step of the insulating material is completed. At the end of the expansion step, the outer walls and the inner plug are moved apart and let come out the full fridge body.

As mentioned, the inner shell is typically laid onto a rigid abutting body (plug) which has a matching shape and perfectly matches the outer surface of the shell. The outer cabinet is instead placed resting against a formwork with planar walls supported by a cross-linked structure.

For greater efficiency in the injection procedure of the expandable material, the injectors are inserted into the back of the cabinet, through suitable holes, possibly provided with silicon valves. Therefore, the household appliance body is normally kept in the jig of the holding apparatus with a lying attitude (with respect to the usual attitude in use), with the access cavity (that is, the opening giving access to the surface of the inner shell) facing downwards. The foaming injectors are then vertically inserted from above into the back of the cabinet.

Holding apparatuses of this kind are known, for example, from WO201094715 or WO2016192991.

An apparatus wherein the household appliance body is arranged with the access cavity downwards, is disclosed for example in US20070182045. This specific technology, whereto also the teaching of the present invention belongs, provides to define a rigid retaining structure for the household appliance body, wherein the back of the household appliance cabinet is faced up wards. The foaming injectors hence descend vertically downwards, insert through holes or cut-outs suitably provided in the abutting jig and then penetrate into foaming holes in the metal sheet of the cabinet back.

Evidently, the household appliance body is very well retained in this way, but the injection holes are necessarily in a fixed position and in a limited number, because the structure of the rear abutting jig has structural elements which hinder the access to the rear surface and hence prevent being able to inject in any desired position.

This layout has proved not fully effective. As a matter of fact, the insulating material is injected in a fluid state in fixed positions into the gap of the household appliance body and it is unable to fill with even density the entire gap, hence causing irregular and little controlled insulation or even presenting air bubbles which are devoid of insulating material.

It would instead be desirable being able to have a technology which produces a more even insulation of the gap in the household appliance body.

In the moulding technique, which is hence a different sector from that of foaming, similar moulds, having multiple movable components, have already been known, wherein two opposite, coupling half-moulds are provided, which perform the same function of the plug and of the formwork, respectively, in the retaining jig . Examples of coupling moulds are described in EP985,506, FR1539760, GB2250946.

### SUMMARY OF THE INVENTION

The object of the present invention is therefore to provide a Z system and a foaming method for cabinets of household appliances which solves the above-cited problem. In particular, it is desired to provide a foaming technology which overcomes such drawbacks, with no relevant increase in costs-

Such object is achieved according to the invention by means of a system and a method having the features defined in essential terms in the main claims herewith enclosed.

Other preferred features of the invention are defined in the dependent claims.

In essential terms, the object here considered is a foaming jig with downward-facing access cavity of the appliance , already known per se. The invention relates to the composition of the retaining jig, in particular the upper part of the jig which is abutting the rear part of the appliance; according to the invention, the upper jig portion which defines the containment formwork of the cabinet has an upper cap configured to lift to 90°, removing at the same time a rear panel of the fridge cabinet.

The cap is raised by means of cylinders or electric actuators and holds the rear panel of the fridge cabinet by means of suction caps or other attachment systems. Due to the fact that the upper cap of the jig lifts the rear panel of the cabinet, it leaves free the gaps of the fridge body where to be able to inject the expandable polyurethane. The gaps remain fully accessible, hence allow to perform the injection of the material in the form of foam either in fixed locations or letting the injection head slide along the gap, to have a better distribution of the foam and obtain a more even product density.

After these foaming operations, the jig cap is closed again, applying the rear panel of the fridge previously taken before the foaming so as to close the fridge gaps in order not to have a polyurethane leak.

The opening raising of the cap can occur longitudinally or folding crosswise, book-like.

Fridge foaming can occur also with the rear panel of the fridge mounted - that is, not retained by the jig cap - by means of suitable holes and closing valves of the hole. The advantage is obtained also in this operation mode, since no mechanical closing plugs are necessary, because these holes of the rear panel are nevertheless sealed by the jig cap itself.

### BRIEF DESCRIPTION OF THE DRAWINGS

Further features and advantages of the invention will in any case be more evident from the following detailed description of a preferred embodiment of the same, supplied purely as a non-limiting example and illustrated in the attached drawings, wherein:
Fig. 1 is a lateral elevation view of an apparatus for a foaming system according to the invention in an operating condition;
fig. 2 is a perspective view of a portion of the apparatus of fig. 1;

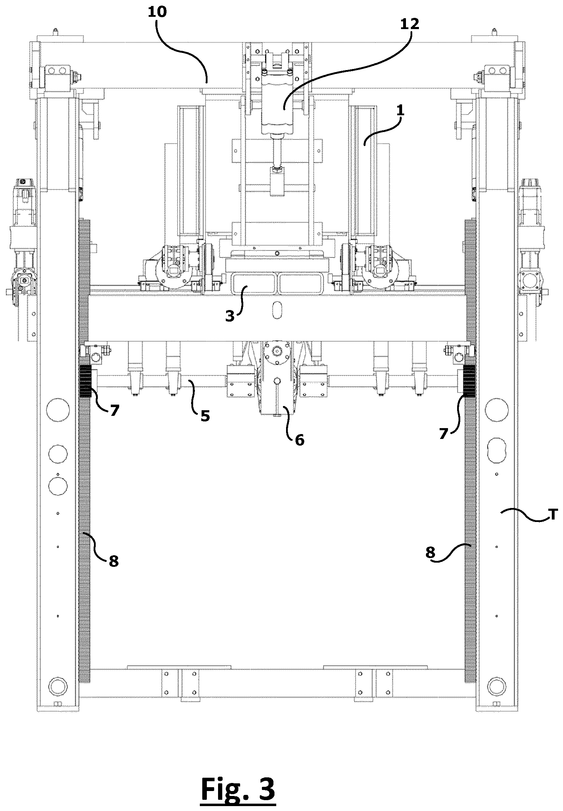

fig. 3 is a rear elevation view of the apparatus of fig. 1;
fig. 4 is a view similar to that of fig. 1 in a waiting position;

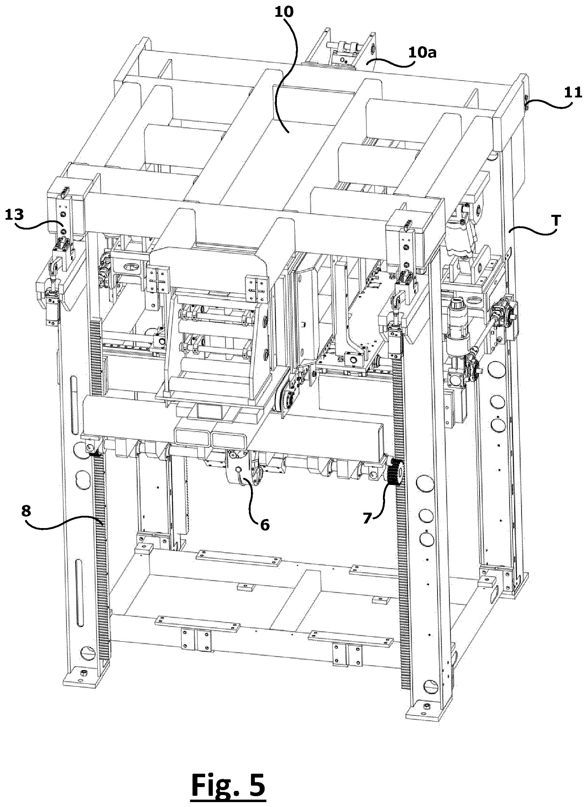

fig. 5 is a perspective view from the front of the apparatus of fig. 1;

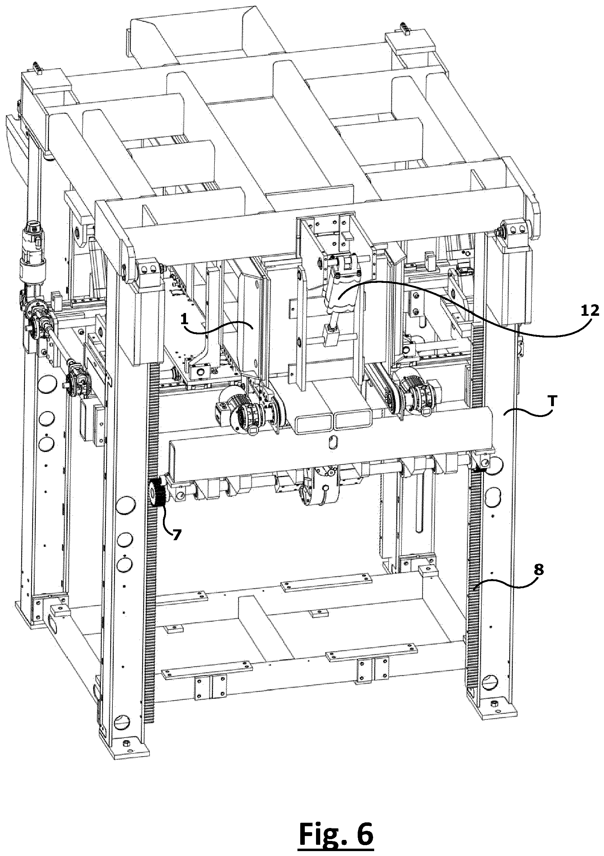

fig. 6 is a perspective view from the rear of the apparatus of fig. 1; and
fig. 7 is a perspective view from the front of the apparatus of fig. 1 in the attitude shown in fig. 5.

### DETAILED DESCRIPTION OF THE PREFERRED EMBODIMENT

In a foaming plant for cabinets of household appliances a holding apparatus is provided, whereon at least a jig A is installed, consisting of a rigid structure where to opposite containment walls are constrained, apt to abut the household appliance body during the expansion step of insulating material foaming.

In the present description reference will be made to a downward-facing-access-cavity holding apparatus, that is, wherein the access cavity of the household appliance, for example of the fridge, is kept facing downwards during foaming. Foaming typically occurs with injectors placed in the top part, which hence inject the expandable material from the back of the fridge cabinet.

In particular, the holding apparatus consists of a frame T fixed to the ground, whereon at least a jig A is mounted which consists of an outer abutting assembly 1, consisting of moving walls of a generally parallelepipedal formwork, and an inner abutting assembly 2, in the form of a variously shaped plug component.

In the case considered, outer abutting assembly 1 is arranged in the top part of frame T. In particular, assembly 1 consists of a formwork which has four vertical perimeter plates and a rear plate, meant to abut against the four side panels and the rear or back panel, respectively, of a household appliance cabinet. The plates of outer assembly 1 comprise for example metal beams 1a and are apt to be drawn mutually closer and apart in order to close and open the formwork.

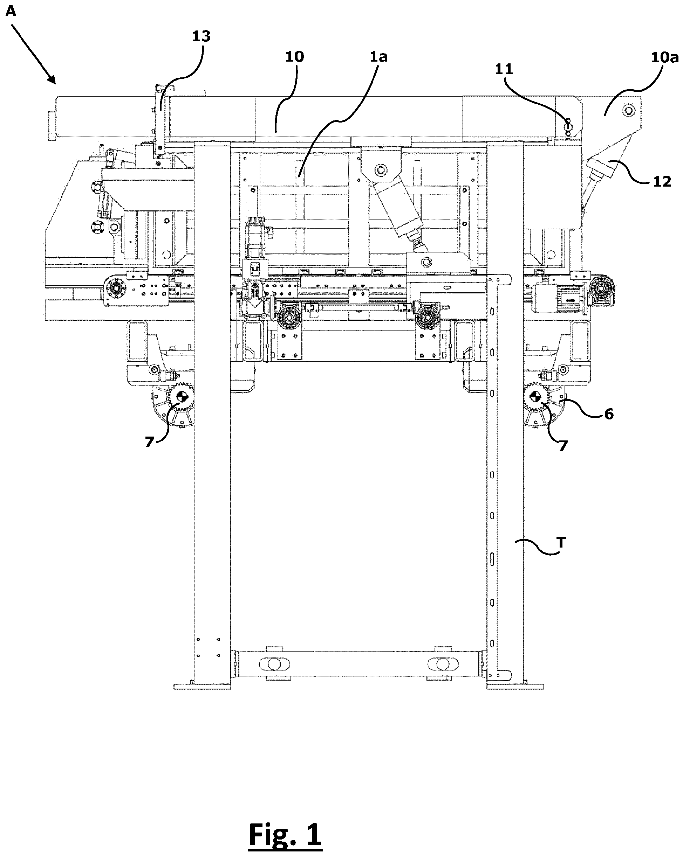

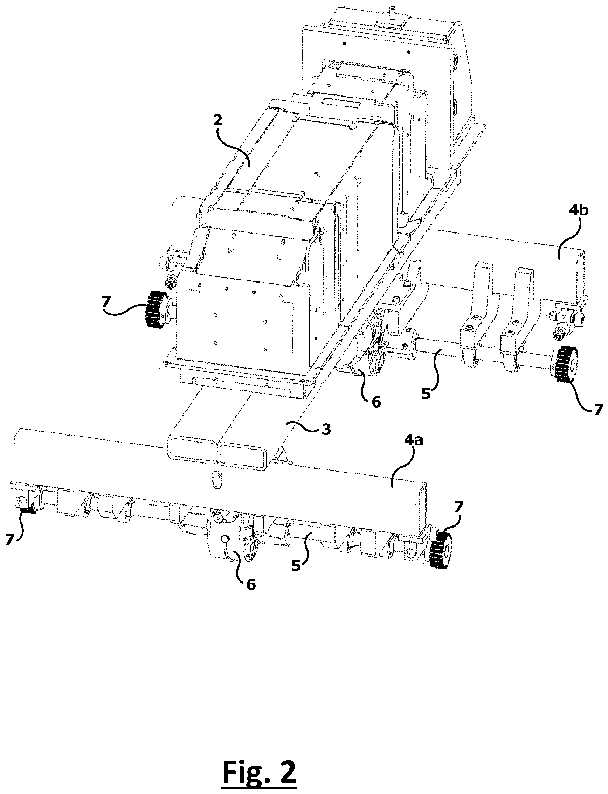

The inner abutting assembly 2 (as clearly shown in fig. 2) is in the form of a shaped body, meant to match the surface of a shell which defines the inner housing compartment of the household appliance body. In the case considered, inner abutting assembly 2 is arranged on a carriage C apt to be lifted, by means of which assembly 2 is lifted from a lower position to an upper position (fig. 1) wherein it enters the inside of outer abutting assembly 1 which forms the upper part of jig A.

As can be clearly seen in figs. 1 and 2, inner abutting assembly 2 is constrained to a longitudinal frame 3, in turn joined to a pair of crossmembers 4a and 4b provided with a rotating shaft 5 driven by a respective gearmotor 6. At the ends of rotating shafts 5 toothed gears 7 are provided which are arranged to engage with respective vertical racks 8 fastened to posts of frame T. With this construction, the actuation of motors 6 causes the rotation of the toothed gears 7 and hence the vertical upward and downward movement of inner jig 2.

Jig A hence consists of an outer abutting assembly 1 and of an inner abutting assembly 2, mutually movable, which define a containment volume apt to be opened which retains the fridge body during the expansion of the expandable foam material.

According to an essential feature of the invention, outer abutting assembly 1 of retaining jig A has a portion thereof, consisting of a back retaining cap or plate 10 - that is, that part of the outer assembly meant to abut against the rear panel of the household appliance cabinet - which is mounted pivoting according to a horizontal rotation axis. Thereby, back retaining cap or plate 10, which makes up a movable sub-portion of the movable outer abutting assembly 1, opens/closes fold-like with respect to the remaining part of outer assembly 1.

In other words, movable outer abutting assembly 1 is split into two portions: a perimeter part, which remains engaged with inner abutting assembly 2 during foaming, and a sub-assembly consisting of a back retaining plate 10, at least in part planar, which is moved into a waiting position during a foaming operation.

In particular, in the illustrated embodiment, back retaining plate 10 is hinged on a pivoting pin 11, or a plurality of hinges, arranged on a front/rear side of frame T, thus defining a rotation axis parallel to the narrower side of the rear panel of the household appliance cabinet. Cap 10 opens fold-like with respect to the remaining part of frame T. However, it is not ruled out that a similar construction may provide a pivoting pin arranged at 90° with respect to the one shown, that is, in the longitudinal direction of the household appliance cabinet.

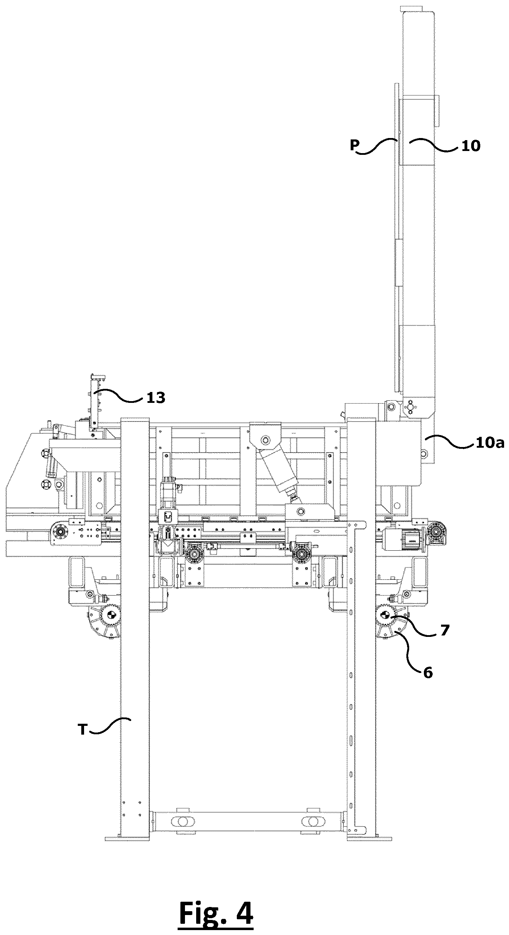

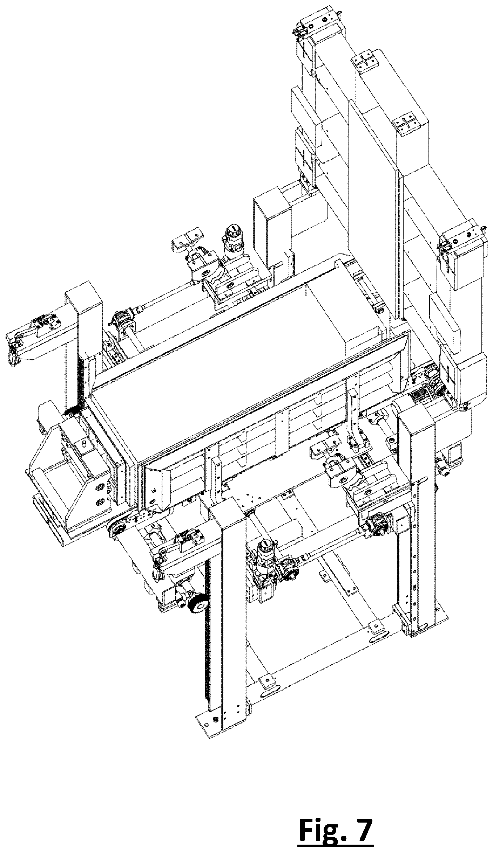

Back retaining cap or plate 10, for example itself consisting of a structure of metal beams, is arranged so as to be able to perform a rotation of at least about 90° (as shown in figs. 4 and 7), so as to fully free access from above to the rear part of the household appliance cabinet.

For such purpose, upper retaining plate 10, which makes up indeed a sort of pivoting cap above frame T, has a lever portion 10a, which extends in a cantilever manner beyond rotation pin 11, where to an end of an actuator 12 is constrained. The other end of actuator 12 is constrained to frame T. Thereby, by controlling actuator 12, it is possible to lift back retaining plate 10 from a working position of fig. 1 to a waiting position of fig. 4 or fig. 7.

Actuator 12 can be of any known type, for example electric, pneumatic or hydraulic.

In order to securely fasten back retaining plate 10 to frame T, to adequately support the stresses transmitted to retaining plate 10 by the expansion of the insulating material, latching means 13 are furthermore preferably provided, possibly controlled in sync with actuator 21. Latching means 13 acts between back retaining plate 10 and frame T.

Latching means 13 are used for securely latch to frame T the free end of back retaining plate 10 when it is in closed working position (fig. 1). Latching means 13 are instead released to allow the lifting of back plate 10 during the actuation of actuator 12 (fig. 4), towards the waiting position.

Thanks to this arrangement, when the household appliance shell is coupled with the rear household appliance cabinet within retaining jig A, the entire rear surface of the cabinet remains accessible from above if back plate 10 is in its waiting position.

That allows to be able to insert from above one or more foaming injectors in any position of the rear surface of the fridge cabinet, with a twofold advantage: on the one hand, the holes for the introduction of the expandable material can be placed in any position and, on the other hand, the foaming injectors can also be moved into the gap during foaming. This last feature is particularly advantageous because it is possible to provide wider access holes and to move the injectors during foaming, which helps the filling of the gap between shell and cabinet and hence improves the evenness of the resulting material.

According to a preferred variant of the invention, back retaining plate 10 furthermore has holding means (not shown in detail) suitable to hold a rear panel P of the household appliance cabinet. For example, the holding means are in the shape of suction caps connected to a vacuum suction unit, which keep rear panel P adhering to by depression.

Thereby, foaming can be made having full access to the gap between shell and cabinet, because the entire rear panel P of the cabinet is removed.

The foaming procedure can hence be started with rear panel P attached to the raised back retaining plate 10, hence in a removed condition from the household appliance cabinet, as shown in fig. 1: the foaming injectors can be moved according to a preset path, so as to distribute very effectively the expandable foam along the perimeter profile of the gap.

The foam injection operation can be started with the fridge body (outer cabinet + inner shell) already inserted in the jig A and retained at least on all sides except for the rear side. When the gap of the household appliance has been filled, at least in part, with the expandable material, the injectors (not shown) are moved away and actuator 12 lowers cap 10 and brings rear panel P in coupled engagement with the household appliance cabinet, retaining it in position (also with the help of latching means 13) until the expanding step of the expandable material has been completed. Once the cap of jig A has been closed again, if required it is possible to complete gap foaming in a traditional manner, by inserting again the injectors between the beams of retaining plate 10 and injecting the expandable material through conventional holes pierced in the rear panel P of the household appliance cabinet, which holes are possibly provided with silicone valves.

Once the expansion step of the expandable material has been completed, the household appliance body, consisting of the inner shell, of the outer cabinet and of the insulating material embedded in the gap, is still kept on the carriage C and is lowered again along frame T, to then be translated to subsequent working processes (for example to an oven to complete cross-linking of the insulating material).

As can be clearly understood from the above provided description, the solution provided here allows to perfectly achieve the objects set forth in the preliminary remarks. As a matter of fact, without substantially changing the construction of a holding apparatus of a known type, it is possible to achieve a significant advantage in the results of the foaming procedure. Due to the rotation of the upper cap of the apparatus, it is possible to obtain a more even filling of the household appliance gap, all to the benefit of density homogeneity and of the quality of the corresponding insulating features. Ultimately, this foaming mode hence also allows to obtain savings of material as well as a greater speed of execution.

The proposed solution is also applicable, with suitable frame changes and the addition of few actuators, to jigs of existing systems.

However, it is understood that the invention must not be considered limited to the particular arrangement illustrated above, which represents only an exemplifying embodiment thereof, but that different variations are possible, all within the reach of a person skilled in the field, without departing from the scope of protection of the invention, which is exclusively defined by the following claims.

## Claims

1. A foaming system for foaming cabinets of electrical household appliances, comprising
- a conveying line of a shell and a cabinet of electrical household appliance,
- a holding apparatus equipped with outer abutting assembly (1) and internal abutting assembly (2), arranged to keep coupled said cabinet and shell of electrical household appliance, during a foaming operation,
- foaming injectors mounted at least vertically movable, to enter a gap between cabinet and shell of a household electrical appliance,
said holding apparatus, comprising a frame (T) whereon there are supported, mutually movable in a vertical direction, said outer abutting assembly (1) and said underlying internal abutting assembly (2), defining a retaining jig (A) which acts as abutting means to keep coupled said cabinet and shell of electrical household appliance between which a gap is defined,
wherein said outer abutting assembly (1) consists of moving walls of a generally parallelepipedal formwork and said inner abutting assembly (2) is in the form of a variously shaped plug component,
**characterised in that**
said outer abutting assembly (1) has a back cap sub-assembly (10) mounted pivoting on said frame (T) according to a horizontal axis (11), between an operating position to close said jig (A) and a waiting position rotated by at least about 90° whereby at least part of said gap within said jig (A) is made accessible,
said back cap sub-assembly being a portion consisting of a back retaining cap (10) mounted pivoting according to a horizontal rotation axis, which makes up a movable sub-portion of the movable outer abutting assembly (1) which can open/close fold-like with respect to the remaining part of said outer abutting assembly (1).

2. The system as in claim 1, wherein said back cap sub-assembly (10) is a planar plate.

3. The system as in claim 2, wherein said back cap sub-assembly (10) has holding means apt to retain a rear panel (P) of a cabinet of a household electrical appliance which makes up part of said coupling members of said household appliance.

4. The system as in claims 1, 2 or 3, wherein said back cap sub-assembly (10) has a cantilevered lever component (10a) hinged to one end of a control actuator (12).

5. The system as in claims 1, 2, 3 or 4, wherein latching means (13) are furthermore provided, apt to constrain in a releasable way said back cap sub-assembly (10) of the outer abutting assembly (1) to said frame (T).

6. The system as in any one of the previous claims, wherein said foaming injectors are mounted movable also according to a horizontal path.

7. A foaming method of cabinets for electrical household appliances, comprising the steps of
- mutually coupling a shell and a cabinet of an electrical household appliance so as to define a gap between them,
- keeping said cabinet and shell of an electrical household appliance coupled together by means of an outer abutting assembly (1) and an internal abutting assembly (2), respectively,
- injecting a foam of expandable insulating material into said gap, causing the expansion pressure to be opposed by said outer abutting assembly (1) and internal abutting assembly (2),
wherein said outer abutting assembly (1) and internal abutting assembly (2) are mounted on a foaming system as in any one of previous claims and **characterised in that**
before said foam injection step, a back cap sub-assembly (10) of said outer abutting assembly (1) is caused to pivot to a waiting position rotated by at least about 90°, so that at least part of said gap is made accessible from above by foaming injectors,
said foam injection is performed by moving said foaming injectors also on a horizontal path within said gap, said back cap sub-assembly (10) is brought back into a substantially horizontal operating position upon at least partial completion of said foam injection.

8. The foaming method as in claim 7, wherein a rear panel (P) of said cabinet of an electrical household appliance is engaged with said back cap sub-assembly (10) of the outer abutting assembly (1) before bringing this latter into an operating position.

## Patentansprüche

1. Aufschäumsystem zum Aufschäumen von Schränken von elektrischen Haushaltsgeräten, umfassend
- eine Förderleitung eines Gehäuses und eines Schranks eines elektrischen Haushaltsgeräts,
- eine Haltevorrichtung, die mit einer äußeren Anschlagbaugruppe (1) und einer inneren Anschlagbaugruppe (2) ausgestattet ist, die angeordnet ist, um den Schrank und das Gehäuse des elektrischen Haushaltsgeräts während eines Schäumvorgangs gekoppelt zu halten,
- Aufschäuminjektoren, die zumindest vertikal beweglich montiert sind, um in einen Spalt zwischen dem Schrank und dem Gehäuse eines elektrischen Haushaltsgeräts einzutreten,
wobei die Haltevorrichtung einen Rahmen (T) umfasst, auf dem die äußere Anschlagbaugruppe (1) und die darunterliegende innere Anschlagbaugruppe (2), die eine Haltevorrichtung (A) definieren, die als Anschlagmittel wirkt, um den Schrank und das Gehäuse des elektrischen Haushaltsgeräts, zwischen denen ein Spalt definiert ist, gekoppelt zu halten, in einer vertikalen Richtung gegenseitig beweglich getragen werden,
wobei die äußere Anschlagbaugruppe (1) aus beweglichen Wänden einer im Allgemeinen parallelepipedischen Schalung besteht und die innere Anschlagbaugruppe (2) in Form einer unterschiedlich geformten Steckerkomponente vorliegt,
**dadurch gekennzeichnet, dass**
die äußere Anschlagbaugruppe (1) eine hintere Kappenunterbaugruppe (10) aufweist, die an dem Rahmen (T) gemäß einer horizontalen Achse (11) zwischen einer Betriebsposition zum Schließen der Vorrichtung (A) und einer Warteposition, die um mindestens etwa 90° gedreht ist, schwenkbar montiert ist, wodurch mindestens ein Teil des Spalts innerhalb der Vorrichtung (A) zugänglich gemacht wird,
wobei die hintere Kappenunterbaugruppe ein Abschnitt ist, der aus einer hinteren Haltekappe (10) besteht, die gemäß einer horizontalen Drehachse schwenkbar montiert ist, die einen beweglichen Unterabschnitt der beweglichen äußeren Anschlagbaugruppe (1) bildet, der sich faltenartig in Bezug auf den verbleibenden Teil der äußeren Anschlagbaugruppe (1) öffnen/schließen kann.

2. System nach Anspruch 1, wobei die hintere Kappenunterbaugruppe (10) eine ebene Platte ist.

3. System nach Anspruch 2, wobei die hintere Kappenunterbaugruppe (10) Haltemittel aufweist, die geeignet sind, um eine Rückwand (P) eines Schranks eines elektrischen Haushaltsgeräts zu halten, die einen Teil der Kopplungselemente des Haushaltsgeräts bildet.

4. System nach Anspruch 1, 2 oder 3, wobei die hintere Kappenunterbaugruppe (10) eine freitragende Hebelkomponente (10a) aufweist, die an einem Ende eines Steueraktuators (12) angelenkt ist.

5. System nach Anspruch 1, 2, 3 oder 4, wobei ferner Verriegelungsmittel (13) bereitgestellt sind, die geeignet sind, um die hintere Kappenunterbaugruppe (10) der äußeren Anschlagbaugruppe (1) in einer lösbaren Weise an dem Rahmen (T) zu halten.

6. System nach einem der vorhergehenden Ansprüche, wobei die Aufschäuminjektoren auch entlang einer horizontalen Bahn beweglich montiert sind.

7. Aufschäumverfahren von Schränken für elektrische Haushaltsgeräte, umfassend die Schritte
- gegenseitiges Koppeln eines Gehäuses und eines Schranks eines elektrischen Haushaltsgeräts, um einen Spalt zwischen ihnen zu definieren,
- Zusammenhalten des Schranks und des Gehäuses eines elektrischen Haushaltsgeräts mittels einer äußeren Anschlagbaugruppe (1) bzw. einer inneren Anschlagbaugruppe (2),
- Einspritzen eines Schaums aus expandierbarem Isoliermaterial in den Spalt, wodurch der Expansionsdruck durch die äußere Anschlagbaugruppe (1) und die innere Anschlagbaugruppe (2) entgegengesetzt wird, wobei die äußere Anschlagbaugruppe (1) und die innere Anschlagbaugruppe (2) an einem Aufschäumsystem nach einem der vorhergehenden Ansprüche montiert sind, und **dadurch gekennzeichnet, dass**
vor dem Schaumeinspritzschritt eine hintere Kappenunterbaugruppe (10) der äußeren Anschlagbaugruppe (1) in eine Warteposition geschwenkt wird, die um mindestens etwa 90° gedreht ist, so dass mindestens ein Teil des Spalts von oben durch Aufschäuminjektoren zugänglich gemacht wird,
die Schaumeinspritzung durchgeführt wird, indem die Aufschäuminjektoren auch auf einer horizontalen Bahn innerhalb des Spalts bewegt werden, wobei die hintere Kappenunterbaugruppe (10) nach mindestens teilweisem Abschluss der Schaumeinspritzung in eine im Wesentlichen horizontale Betriebsposition zurückgebracht wird.

8. Aufschäumverfahren nach Anspruch 7, wobei eine Rückwand (P) des Schranks eines elektrischen Haushaltsgeräts mit der hinteren Kappenunterbaugruppe (10) der äußeren Anschlagbaugruppe (1) in Eingriff gebracht wird, bevor diese Letztere in eine Betriebsposition gebracht wird.

## Revendications

1. Système de moussage pour le moussage d'armoires d'appareils électroménagers, comprenant
- une chaîne de transport d'une coque et d'une armoire d'appareil électroménager,
- un appareil de maintien équipé d'un ensemble de butée externe (1) et d'un ensemble de butée interne (2), agencé pour maintenir l'accouplement desdites armoire et coque de l'appareil électroménager, au cours d'une opération de moussage,
- des injecteurs de moussage montés au moins de manière mobile verticalement, pour entrer dans un espace entre l'armoire et la coque d'un appareil électroménager,
ledit appareil de maintien comprenant un cadre (T) sur lequel sont supportés, mutuellement mobiles dans une direction verticale, ledit ensemble de butée externe (1) et ledit ensemble de butée interne (2) sous-jacent, définissant un gabarit de retenue (A) qui agit comme un moyen de butée pour maintenir l'accouplement desdites armoire et coque de l'appareil électroménager entre lesquelles un espace est défini,
dans lequel ledit ensemble de butée externe (1) est constitué de parois mobiles présentant un coffrage généralement parallélépipédique et ledit ensemble de butée interne (2) se présente sous la forme d'un composant à connecteur de formes variées,
**caractérisé en ce que**
ledit ensemble de butée externe (1) présente un sous-ensemble de capuchon arrière (10) monté de manière pivotante sur ledit cadre (T) selon un axe horizontal (11), entre une position de fonctionnement pour fermer ledit gabarit (A) et une position d'attente tournée d'au moins 90°, ce qui permet de rendre accessible au moins une partie dudit espace dans ledit gabarit (A),
ledit sous-ensemble de capuchon arrière étant une partie constituée d'un capuchon de retenue arrière (10) monté de manière pivotante selon un axe de rotation horizontal, qui constitue une sous-partie mobile de l'ensemble de butée externe mobile (1) qui peut être fermé/ouvert en étant plié par rapport à la partie restante dudit ensemble de butée externe (1).

2. Système selon la revendication 1, dans lequel ledit sous-ensemble de capuchon arrière (10) est une plaque plane.

3. Système selon la revendication 2, dans lequel ledit sous-ensemble de capuchon arrière (10) présente des moyens de maintien aptes à retenir un panneau arrière (P) d'une armoire d'un appareil électroménager qui fait partie desdits organes d'accouplement dudit appareil électroménager.

4. Système selon les revendications 1, 2 ou 3, dans lequel ledit sous-ensemble de capuchon arrière (10) présente un composant de levier en porte-à-faux (10a) articulé à une extrémité d'un actionneur de commande (12).

5. Système selon les revendications 1, 2, 3 ou 4, dans lequel des moyens de verrouillage (13) sont en outre prévus, aptes à contraindre de manière amovible ledit sous-ensemble de capuchon arrière (10) de l'ensemble butée externe (1) vers ledit cadre (T).

6. Système selon l'une des revendications précédentes, dans lequel lesdits injecteurs de moussage sont montés de manière mobile également selon un trajet horizontal.

7. Procédé de moussage d'armoires pour des appareils électroménagers, comprenant les étapes de
- coupler mutuellement une coque et une armoire d'un appareil électroménager de façon à définir un espace entre elles,
- maintenir l'accouplement mutuel desdites armoire et coque d'un appareil électroménager au moyen d'un ensemble de butée externe (1) et d'un ensemble de butée interne (2), respectivement,
- injecter une mousse de matériau isolant expansible dans ledit espace, amenant lesdits ensemble de butée externe (1) et ensemble de butée interne (2) à s'opposer à la pression d'expansion,
dans lequel lesdits ensemble de butée externe (1) et ensemble de butée interne (2) sont montés sur un système de moussage selon l'une des revendications précédentes et **caractérisé en ce que**
avant ladite étape d'injection de mousse, un sous-ensemble de capuchon arrière (10) dudit ensemble de butée externe (1) est amené à tourner vers une position d'attente tournée d'au moins 90°, de sorte qu'au moins une partie dudit espace est rendu accessible par le dessus par les injecteurs de moussage,
ladite injection de mousse est réalisée en déplaçant lesdits injecteurs de moussage également sur un trajet horizontal à l'intérieur dudit espace, ledit sous-ensemble de capuchon arrière (10) est ramené dans une position de fonctionnement sensiblement horizontale après au moins l'achèvement partiel de ladite injection de mousse.

8. Procédé de moussage selon la revendication 7, dans lequel un panneau arrière (P) de ladite armoire d'un appareil électroménager est mis en prise avec ledit sous-ensemble de capuchon arrière (10) de l'ensemble de butée externe (1) avant d'amener ce dernier dans une position de fonctionnement.
